Europäisches Patentamt

European Patent Office

Office européen des brevets

(19)

(11) Veröffentlichungsnummer : **0 144 954**
**B1**

(12) # EUROPÄISCHE PATENTSCHRIFT

(45) Veröffentlichungstag der Patentschrift :
25.05.88

(51) Int. Cl.⁴ : **G 21 C 11/06**

(21) Anmeldenummer : 84114681.4

(22) Anmeldetag : 03.12.84

(54) **Kernbehälter für einen Hochtemperatur-Kernreaktor.**

(30) Priorität : 15.12.83 DE 3345478

(43) Veröffentlichungstag der Anmeldung :
19.06.85 Patentblatt 85/25

(45) Bekanntmachung des Hinweises auf die Patenterteilung : 25.05.88 Patentblatt 88/21

(84) Benannte Vertragsstaaten :
BE CH DE FR GB IT LI NL SE

(56) Entgegenhaltungen :
EP-A- 0 059 130
BE-A-   624 286
DE-A- 2 354 540
DE-A- 3 027 421
DE-A- 3 047 682
US-A- 3 124 514

(73) Patentinhaber : INTERATOM Gesellschaft mit beschränkter Haftung
Friedrich-Ebert-Strasse
D-5060 Bergisch Gladbach 1 (DE)

(72) Erfinder : Ullrich, Manfred
Kippekausen 115
D-5060 Bergisch-Gladbach (DE)

(74) Vertreter : Mehl, Ernst, Dipl.-Ing. et al
Postfach 22 01 76
D-8000 München 22 (DE)

EP 0 144 954 B1

## Beschreibung

Die vorliegende Erfindung betrifft einen Kernbehälter für einen Hochtemperatur-Kernreaktor der Art, wie er beispielsweise in der DE-A-3 016 402 beschrieben worden ist. Dort wurde unter anderem vorgeschlagen, einen bei Bedarf als Ganzes aus der Anlage ausbaubaren, metallischen Kernbehälter vorzusehen, der mit einer Auskleidung aus Graphit- und Kohlesteinblöcken zur Aufnahme der kugelförmigen Brennelemente hergerichtet ist. Eine innere Schicht aus Graphit bewirkt die Reflektion der Neutronen zurück in die Spaltzone. Da Graphit ein verhältnismäßig guter Wärmeleiter ist, ist zum Schutze des Kernbehälters vor der in der Spaltzone herrschenden hohen Temperatur eine äußere Schicht aus Kohlesteinblöcken erforderlich. Diese Schichten werden nach Art eines Mauerwerks aus aufeinandergestapelten Blöcken aufgebaut, wobei die einzelnen Blöcke in ihrer Größe durch die Fertigungsmöglichkeiten beschränkt sind und sich in ihrer Formgebung den gewünschten Zwecken anpassen, z. B. als vorkragende Steine, mit denen ein den oberen Abschluß des Raumes bildende Decke hergestellt werden kann. Die oben angegebene Konstruktion berücksichtigt jedoch nicht in ausreichender Weise den Umstand, daß Graphit, Kohlestein und der zur Herstellung des Kernbehälters verwendete Stahl recht unterschiedliche Wärmeausdehnungskoeffizienten aufweisen. Beim Hochfahren des Reaktors von Raumtemperatur auf die Betriebstemperatur von etwa 950 °C und bei späteren Abschalt-und Wiederanfahrvorgängen ist nicht gewährleistet, daß das Eigengewicht der Einbauten ausreicht, um die an den Grenzflächen zwischen den einzelnen Materialien auftretenden Reibungskräfte zu überwinden. Es können sich dann zwischen den Blöcken in völlig unkontrollierbarer Weise Spalte bilden, durch die heiße Gassträhnen an den Kernbehälter gelangen und die sie in seiner Festigkeit gefährden können.

Aufgabe der vorliegenden Erfindung ist eine Anordnung der Einbauten im Kernbehälter, die gewährleistet, daß auch nach beliebig häufigem Durchfahren der verschiedenen Betriebszustände sich zwischen den einzelnen Blöcken keine durchgehenden Spalte bilden und bei der die Standfestigkeit des « Mauerwerks » auch bei Einwirkung äußerer Kräfte (z. B. Erdbeben) auf den Kernbehälter erhalten bleibt ; dies auch dann, wenn die die Spaltzone bildenden Brennelemente aus dem Behälter entfernt worden sind und nicht mehr zur Stützung beitragen.

Die Lösung dieser Aufgabe erfolgt durch die im kennzeichnenden Teil des ersten Anspruchs angegebenen Mittel. Dadurch ist sichergestellt, daß sich keine in radialen Ebenen durchlaufenden Spalte ergeben können und daß der Ausgleich der verschiedenen Wärmedehnungen nicht mehr zwischen den Säulen aus Graphit- und Kohlesteinblöcken als Ganzes, sondern nur noch auf Teilhöhen erfolgen muß.

Die im zweiten Anspruch vorgeschlagene Ausgestaltung der Erfindung verhindert eine großflächige Reibung zwischen der äußeren Schicht der Einbauten und dem Kernbehälter und sorgt zugleich dafür, daß sich die azimutale Orientierung der in einer Säule aufeinandergestapelten Blöcke zueinander nicht ändern kann. Wegen der geringen Reibung zwischen den Einbauten und dem Kernbehälter reicht das Gewicht der ersteren in jedem Fall aus, um ein « Kleben » der Blöcke am Kernbehälter zu verhindern und so dafür zu sorgen, daß auch in horizontalen Ebenen keine durchgehenden Spalte entstehen können.

Die im dritten Anspruch vorgeschlagenen Reifen sorgen dafür, daß sich die einzelnen Säulen radial nicht zueinander verschieben können und verbessern die Standfestigkeit.

Die im vierten Anspruch vorgeschlagene spezielle Ausgestaltung gestattet durch die im Grenzbereich zwischen den einzelnen Säulen « weiche » Ausführung der Reifen eine der Höhe nach unterschiedliche Wärmeausdehnung benachbarter Säulen.

Dieser Effekt kann durch die im fünften Anspruch vorgeschlagenen Maßnahmen verstärkt werden.

Ein Kippen der einzelnen Säulen der Einbauten mit den an den obersten Steinen angeformten, die Decke bildenden Vorsprüngen (auf eine gewölbeartige Konstruktion wird mit Rücksicht auf die möglicherweise verschieden große Wärmedehnung der einzelnen Säulen verzichtet) wird durch die im sechsten Anspruch vorgeschlagene Konstruktion verhindert, wobei der Metallblock zugleich das bereits auf den obersten Steinen jeder Säule lastende Gewicht so erhöht, daß die Reibungskräfte zwischen den einzelnen Werkstoffen überwunden werden.

Die im siebenten Anspruch vorgeschlagene besondere Ausgestaltung dieses Gedankens ermöglicht ihrerseits ebenfalls eine der Höhe nach unterschiedliche Wärmeausdehnung der einzelnen Säulen.

Ein Ausführungsbeispiel der Erfindung ist in der Zeichnung dargestellt und zwar zeigt

Fig. 1 einen gasgekühlten Hochtemperaturreaktor im Längsaxialschnitt entsprechend der Linie I-I der Fig. 2 und 3,

Fig. 2 einen Querschnitt entsprechend der Linie II-II der Fig. 1,

Fig. 3 einen Querschnitt entsprechend der Linie III-III der Fig. 1,

Fig. 4 in vergrößertem Maßstab eine Draufsicht auf einen Teil eines Reifens,

Fig. 5 einen Schnitt entsprechend der Linie V-V der Fig. 4 und

Fig. 6 einen Schnitt entsprechend der Linie VI-VI der Fig. 4.

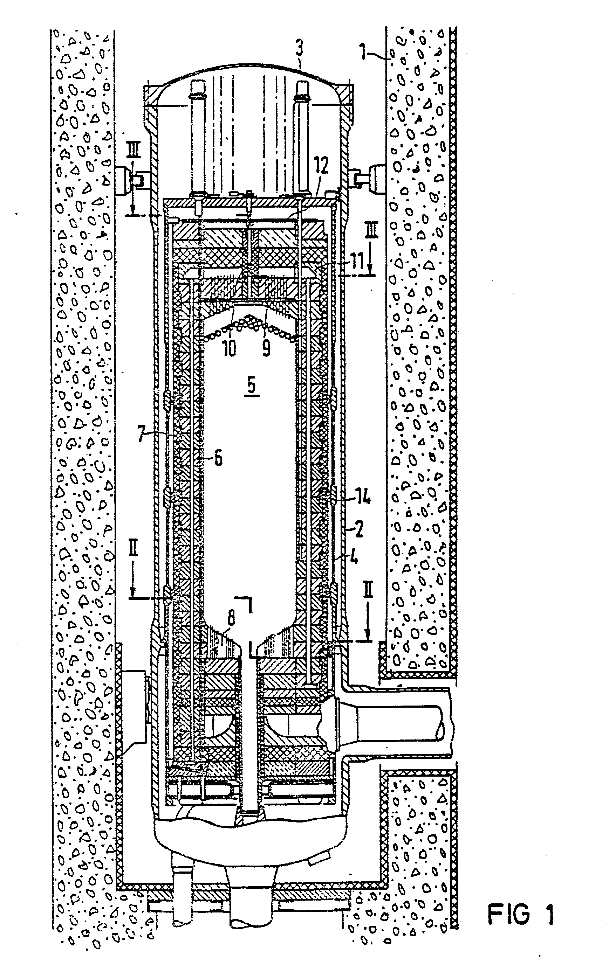

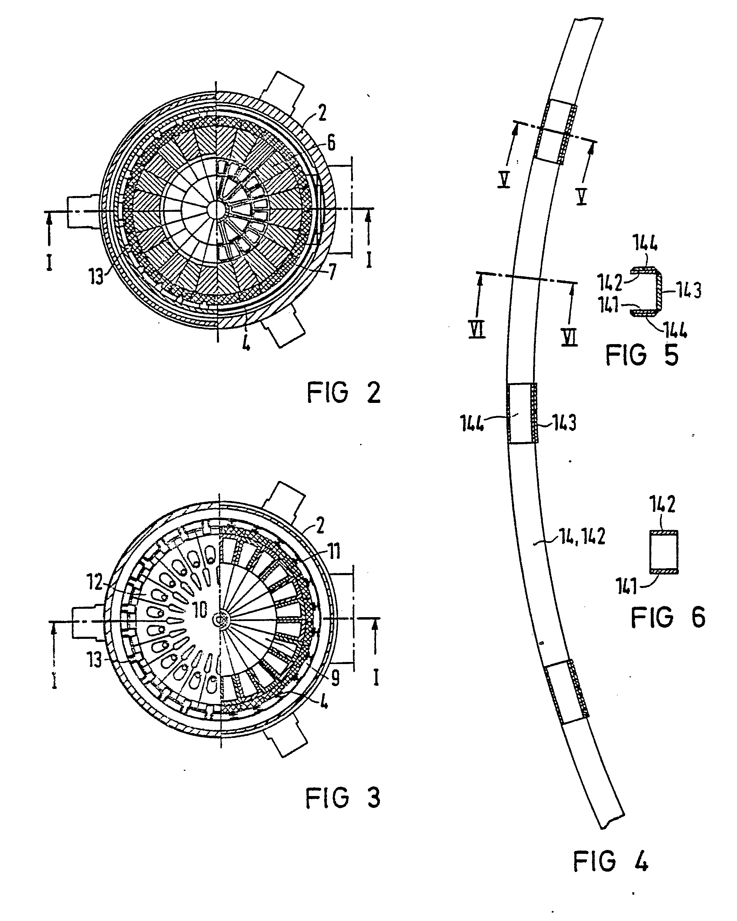

Innerhalb einer der Strahlenabschirmung dienenden Betonstruktur 1 ist ein stählerner Druckbehälter 2 angeordnet, der an seinem oberen Ende mit einem abnehmbaren Deckel 3 versehen ist. Innerhalb des Druckbehälters 2 ist ein ebenfalls metallischer Kernbehälter 4 angeordnet ; er enthält keramische Einbauten, die einen Raum zur Aufnahme einer Spaltzone 5 umschließen, die aus einer Vielzahl von kugelförmigen Brennelementen besteht. Die Einbauten bestehen aus einer inneren Schicht aus Graphitblöcken 6 und einer äußeren Schicht aus Kohlesteinblökken 7, die im Beispiel zu je 24 nebeneinanderstehenden Säulen aufgestapelt sind. Aus der Fig. 2 ist erkennbar, daß die Säulen aus Graphitblöcken 6 und die Säulen aus Kohlesteinblöcken 7 azimutal gegeneinander versetzt sind. Die im kalten Zustand zwischen den einzelnen Säulen unvermeidlicherweise klaffenden Spalte sind durch die Anordnung nicht durchgehend, und bei einem Anfahren des Reaktors, bei dem sich die Spalte erst allmählich schließen, können keine Strähnen des in der Spaltzone 5 aufgeheizten Gases an den Kernbehälter 4 gelangen. Der Unterdrückung von horizontalen Spalten zwischen den Blöcken dient die aus der Fig. 1 ersichtliche der Höhe nach gestaffelte und miteinander verzahnte Anordnung. Jeweils zwei Graphitblöcke 6 stützen sich dabei auf einem Kohlesteinblock 7 ab, und umgekehrt lastet das Gewicht von jeweils Kohlesteinblöcken 7 auf einem Graphitblock 6. Ein die Einbauten nach unten zu abschließender Boden 8 entspricht der herkömmlichen Bauweise und weist keine Besonderheiten auf. Eine den oberen Abschluß besorgende Decke 9 wird durch an den jeweils obersten Graphitblöcken 6 an jeder Säule angeformte Vorsprünge gebildet, die ebenfalls ohne direkte Verbindung untereinander sich zusammenschließen, dabei in der Mitte einen herausnehmbaren Stopfen 10 umfassend. Zum Ausgleich des Kippmomentes ist jede Säule der Graphitblöcke 6 mit einem besonderen Metallblock 11, z. B. aus Grauguß beschwert, der zusätzlich zur Überwindung der zwischen den Graphit- 6 und den Kohlesteinblöcken 7 auftretenden Reibungskräfte beiträgt und an seiner Oberseite mit einer Deckelplatte 12 (siehe linke Hälfte der Fig. 3) verschraubt ist, die entsprechend der Teilung der Säulen in ihrem äußeren Teil radial geschlitzt ist. Es entstehen so einzelne Lappen ; diese können unabhängig von den benachbarten Säulen den unterschiedlichen Wärmedehnungen der dazugehörigen Säule·folgen. Der Kernbehälter 4 ist an seiner Innenseite je Säule der Außenschicht mit einer Führungsschiene 13 versehen, die als Feder in zu diesem Zweck in den Kohlesteinblöcken 7 angelegte Nuten greift. Die azimutale Ausrichtung der einzelnen, in einer Säule übereinanderstehenden Blöcke ist so dieselbe. Zugleich können die Blöcke 7 auf den Führungsschienen 13 der Höhe nach um das durch die unterschiedlichen Wärmedehnungen erforderliche Maß gleiten. Für den radialen Zusammenhalt sorgen mehrere über die Höhe verteilte Reifen 14, die an jeder Säule der Außenschicht befestigt sind. Damit trotzdem eine unbehinderte Wärmedehnung der Höhe stattfinden kann, sind die Reifen 14 nur auf einem Teil ihres Umfanges « steif » ausgeführt. Jeder Reifen besteht aus zwei parallel zueinander an geordneten Ringen 141, 142, die nur auf einem Teil ihres Umfanges durch einen Steg 143 je Säule miteinander verbunden sind. Falls erforderlich, können die Ringe 141, 142, durch in den gleichen Bereichen aufgebrachte Dopplungen 144 weiter versteift werden.

## Patentansprüche

1. Kernbehälter (4) für einen Hochtemperatur-Kernreaktor mit Einbauten aus in Säulen aufeinandergestapelten Graphit- (6) und Kohlesteinblöcken (7), dadurch gekennzeichnet, daß die die innere Schicht der Einbauten bildenden Graphitblöcke (6) und die die äußere Schicht bildenden Kohlesteinblöcke (7) der Höhe nach gestaffelt sowie azimutal gegeneinander versetzt angeordnet und wechselseitig miteinander verzahnt sind derart, daß jeweils zwei Lagen von Blöcken der einen Art sich auf einer vorkragenden Lage von Blöcken der anderen Art abstützen.

2. Behälter nach Anspruch 1, dadurch gekennzeichnet, daß die Säulen aufeinander gestapelter Kohlesteinblöcke (7) axial gegenüber dem Kernbehälter in Nut- und Federverbindungen (13) geführt sind.

3. Behälter nach Anspruch 1 oder 2, dadurch gekennzeichnet, daß die Säulen aufeinander gestapelter Kohlesteinblöcke (7) radial durch umlaufende Reifen (14) gehalten sind.

4. Behälter nach Anspruch 3, dadurch gekennzeichnet, daß der Reifen (14) aus zwei parallelen, in der Querschnittsebene des Behälters (4) liegenden Ringen (141, 142) besteht, die je Säule auf einem Teil ihres Umfanges durch einen Steg (143) miteinander verbunden sind.

5. Behälter nach Anspruch 4, dadurch gekennzeichnet, daß die Ringe (141, 142) des Reifens (14) im Bereich der Stege (143) verstärkt (144) sind.

6. Behälter nach Anspruch 1, 2 oder 3 mit einer aus an den obersten Blöcken (6) jeder Säule angeformten Vorsprüngen gebildeten Decke (9), dadurch gekennzeichnet, daß jede Säule der aufeinandergestapelten Graphitblöcke (6) mit einem Metallblock (11) beschwert ist, der mit einer gemeinsamen Deckelplatte (12) verbunden ist.

7. Behälter nach Anspruch 6, dadurch gekennzeichnet, daß die Deckelplatte (12) je Säule der aufeinandergestapelten Graphitblöcke (6) einen sich über einen Teil eines Radius erstreckenden Schlitz aufweist.

## Claims

1. A core vessel (4) for a high-temperature nuclear reactor with components made of graphite (6) and carbon (7) blocks stacked on top of one another in columns, characterised in that the graphite blocks (6) forming the inner layer of the components and the carbon blocks (7) forming the outer layer are arranged to be staggered according to height and staggered azimuthally with respect to each other, and are alternately interlocked with each other in such a way that in each case two layers of blocks of one type are supported on a projecting layer of blocks of the other type.

2. A vessel as claimed in Claim 1, characterised in that the columns of carbon blocks (7) stacked on top of one another are guided axially facing the core vessel in groove-and-tongue joints (13).

3. A vessel as claimed in Claim 1 or 2, characterised in that the columns of carbon blocks (7) stacked on top of one another are supported radially by collars (14) running round them.

4. A vessel as claimed in Claim 3, characterised in that the collar (14) consists of two parallel rings (141, 142) situated in the cross-sectional plane of the container (4), which in the case of each column are connected with each other at one part of their circumference by a cross-piece (143).

5. A vessel as claimed in Claim 4, characterised in that the rings (141, 142) of the collar (14) are reinforced (144) in the region of the cross-piece (143).

6. A vessel as claimed in Claim 1, 2 or 3 having a roof (9) formed by projections moulded onto the top blocks (6) of each column, characterised in that each column of graphite blocks (6) stacked on top of one another is weighted with a metal block (11), which is connected to a common cover plate (12).

7. A vessel as claimed in Claim 6, characterised in that for each column of graphite blocks (6) stacked on top of one another, the cover plate (12) has a slot extending across part of a radius.

**Revendications**

1. Cuve de cœur (4) de réacteur nucléaire à haute température comprenant des montages constitués de blocs de graphite (6) et de carbone amorphe (7) empilés les uns sur les autres en colonnes, caractérisée en ce que les blocs de graphite (6) formant la couche intérieure des montages et les blocs de carbone amorphe formant la couche extérieure sont étagés en hauteur ainsi que décalés azimutalement les uns par rapport aux autres et sont imbriqués alternativement les uns avec les autres de manière que deux couches de blocs d'un type s'appuient sur une couche en saillie de blocs de l'autre type.

2. Cuve suivant la revendication 1, caractérisée en ce que les colonnes de blocs de carbone amorphe (7) empilés les uns sur les autres sont guidées axialement par rapport à la cuve de cœur par des assemblages à tenons et mortaises (13).

3. Cuve suivant la revendication 1 ou 2, caractérisée en ce que les colonnes de blocs de carbone amorphe (7) empilés les uns sur les autres sont maintenues par des cerceaux (14) faisant tout le tour.

4. Cuve suivant la revendication 3, caractérisée en ce que le cerceau (14) est constitué de deux anneaux (141, 142) parallèles qui se trouvent dans le plan de la section transversale de la cuve (4) et qui sont reliés l'un à l'autre, pour chaque colonne sur une partie de leur pourtour, par une âme (143).

5. Cuve suivant la revendication 4, caractérisée en ce que les anneaux (141, 142) du cerceau (14) sont renforcés (144) dans la région des âmes (143).

6. Cuve suivant la revendication 1, 2 ou 3, comprenant un couvercle (9) formé de partie saillantes ménagées sur les blocs (6) les plus élevés de chaque colonne, caractérisée en ce que chaque colonne des blocs de graphite (6) empilés les uns sur les autres est alourdie par un bloc métallique (11) qui est relié à une plaque commune (12) formant couvercle.

7. Cuve suivant la revendication 6, caractérisée en ce que la plaque formant couvercle (12) comporte, pour chaque pile de blocs de graphite (6) empilés les uns sur les autres, une fente s'étendant sur une partie d'un rayon.

FIG 1

FIG 2

FIG 3

FIG 4

FIG 5

FIG 6